(19) Europäisches Patentamt / European Patent Office / Office européen des brevets

(11) **EP 2 963 547 A1**

(12) **EUROPEAN PATENT APPLICATION**

(43) Date of publication:
**06.01.2016 Bulletin 2016/01**

(51) Int Cl.:
***G06F 9/45*** (2006.01)

(21) Application number: **15160215.8**

(22) Date of filing: **23.03.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA**<br><br>(30) Priority: **31.03.2014 JP 2014072158** | (71) Applicant: **FUJITSU LIMITED**<br>**Kawasaki-shi,**<br>**Kanagawa 211-8588 (JP)**<br><br>(72) Inventor: **Yamanaka, Masanori**<br>**Kawasaki-shi, Kanagawa 211-8588 (JP)**<br><br>(74) Representative: **Cooper-Rolfe, Elizabeth Louise**<br>**Haseltine Lake LLP**<br>**Lincoln House, 5th Floor**<br>**300 High Holborn**<br>**London WC1V 7JH (GB)** |

(54) **COMPILING DEVICE, COMPILING METHOD, AND STORAGE MEDIUM STORING COMPILER PROGRAM**

(57)     A compiling device comprising: a memory; and a processor coupled to the memory, the processor configured to: extract, from a file, an optimization directive for a program at an intermediate stage of program optimization; by applying the optimization directive, verify validity of data dependency of the program; and by applying the optimization directive, determine a probability of improvement in execution performance, based on a degree of satisfaction of an optimization applicable condition that is to be satisfied by the program.

FIG. 2

## Description

FIELD

The embodiment discussed herein is related to optimization during compiling of a program.

BACKGROUND

In previously considered compilers, there is known a way of inserting an optimization directive into a specific portion of a program in its initial state to direct that specific optimization be performed.

As one of the related-art techniques for improving optimization efficiency, there is known a technique mentioned below (for example, the technique disclosed in Japanese Laid-open Patent Publication No. 10-21086). In this technique, a second optimization single-function processing unit having a second optimization function different from any basic optimization function is included. An optimization single-function historical information generation unit further includes a second optimization single-function historical information generation unit that generates historical information on optimization performed by the second optimization single-function processing unit in a form in which basic optimization functions are combined.

As another related-art technique for improving optimization efficiency, there is known a technique mentioned below (for example, the technique disclosed in Japanese Laid-open Patent Publication No. 2004-021498). It is determined whether or not an instruction in a program including an optimization instruction and a non-optimization instruction (normal instruction) is an optimization instruction, optimization processing is performed only if the instruction is an optimization instruction, and an optimization instruction table consisting of a collection of pointers pointing only to optimization instructions is created. If there is an instruction whose size has been changed by optimization processing, the optimization processing is performed again using the optimization instruction table until no optimization instruction remains in the optimization instruction table. When no instruction whose size has been changed by optimization processing remains, that is, the size change is resolved, the optimization processing is completed.

As yet another related-art technique for improving optimization efficiency, there is known a technique mentioned below (for example, the technique disclosed in Japanese Laid-open Patent Publication No. 2003-173262). An evaluation program generation unit selects from a plurality of optimization directives, optimization directives to be applied, one by one, to each computer program portion including loop processing, and inserts the optimization directive into a location just before each loop (the program portion). In addition, the evaluation program generation unit generates a code for measuring an execution time of each loop and creates an evaluation program. A compile and execution unit compiles this evaluation program to execute it and measures the execution time of each loop. Based on the measured results, an optimum option decision unit detects a compiler directive with which the execution time of each program portion is shortest. An optimization directive insertion unit produces a program in which an optimization directive is inserted into a location just before each loop.

However, the related-art techniques described above have not fully exploited an effect of improving execution performance due to the optimization capability of a compiler.

Accordingly, preferred embodiments of the present disclosure seek to exploit an effect of further improving execution performance due to the optimization capability of a compiler, based on a directive for an intermediate stage of optimization performed by a compiler.

SUMMARY

According to an aspect embodying the invention, a compiling device includes: a memory; and a processor coupled to the memory, the processor configured to: extract, from a file, an optimization directive for a program at an intermediate stage of program optimization; by applying the optimization directive, verify validity of data dependency of the program; and by applying the optimization directive, determine a probability of improvement in execution performance, based on a degree of satisfaction of an optimization applicable condition that is to be satisfied by the program.

BRIEF DESCRIPTION OF DRAWING

FIG. 1 is a block diagram illustrating a configuration of an embodiment of a compiling device according to the present disclosure;
FIG. 2 is a flowchart illustrating a processing example of an optimization-application-target extracting process program;
FIG. 3 is a flowchart illustrating a detailed example of an optimization-application-validity determination process;
FIG. 4A and FIG. 4B are explanatory representations (1) of analysis processing of data dependency;
FIG. 5A and FIG. 5B are explanatory representations (2) of analysis processing of data dependency;
FIG. 6 depicts an example of an optimization-applicable condition scenario table;
FIG. 7A and FIG. 7B are explanatory representations of operation examples in the case where an application condition is "array access being successive in inner loop";
FIG. 8 is a flowchart illustrating a detailed example of an optimization-application-appropriateness determination process;

FIG. 9 is a representation (1) depicting an example of an image of a source program;

FIG. 10 depicts an example of description of an optimization directive file (FIG. 1);

FIG. 11A and FIG. 11B are explanatory representations (1) of optimization operations;

FIG. 12A and FIG. 12B are explanatory representations (2) of optimization operations;

FIG. 13A and FIG. 13B are explanatory representations (3) of optimization operations;

FIG. 14 is a representation (2) depicting an example of an image of a source program;

FIG. 15A, FIG. 15B, and FIG. 15C are explanatory representations (4) of optimization operations;

FIG. 16A and FIG. 16B are explanatory representations (1) of optimization operations for directives for loop operations;

FIG. 17A and FIG. 17B are explanatory representations (2) of optimization operations for directives for loop operations;

FIG. 18 depicts an example of a source program with which the execution performance will be improved by using an optimization directive;

FIG. 19 depicts an optimized state after issuance of a directive for loop fusion of the source program in FIG. 18;

FIG. 20 depicts an optimized state after issuance of a directive for loop division of the source program at an intermediate stage of an image in FIG. 19;

FIG. 21 is a table listing effects of optimization according to this embodiment;

FIG. 22 depicts an example of the correspondence between loops and identifiers; and

FIG. 23 is a block diagram illustrating an example of a hardware configuration of a computer capable of executing a compiler program according to this embodiment.

DESCRIPTION OF EMBODIMENT

Hereinafter, an embodiment for carrying out the present disclosure will be described in detail with reference to the accompanying drawings.

With usual compiler optimization techniques, it is impracticable to direct that a specific portion optimized by a compiler be subjected to further optimization and to perform the optimization. Additionally, in the case of issuing a directive for optimization in the initial state of a program, it is impracticable to issue a directive for optimization of a specified portion if the specified portion has been subjected to optimization one or more times and is not in the initial state. As a specific example, when a compiler applies loop-fusion optimization based on its automatic determination and, immediately after the loop-fusion optimization, the user wishes to perform optimization for dividing a loop at a different location from that of the loop fusion, it is impracticable to issue a directive for this loop division optimization.

Since issuing a desirable directive for optimization is impracticable as described above, there is a possibility that an effect of improving execution performance due to the optimization capability of a compiler is not exploited.

Further, if the user of a compiler directs optimization after verifying that the result of optimization is correct and that the execution performance will be improved upon application of optimization, it places a load on the user.

The embodiment of a compiler described below makes it possible to exploit an effect of further improving execution performance due to the optimization capability of a compiler.

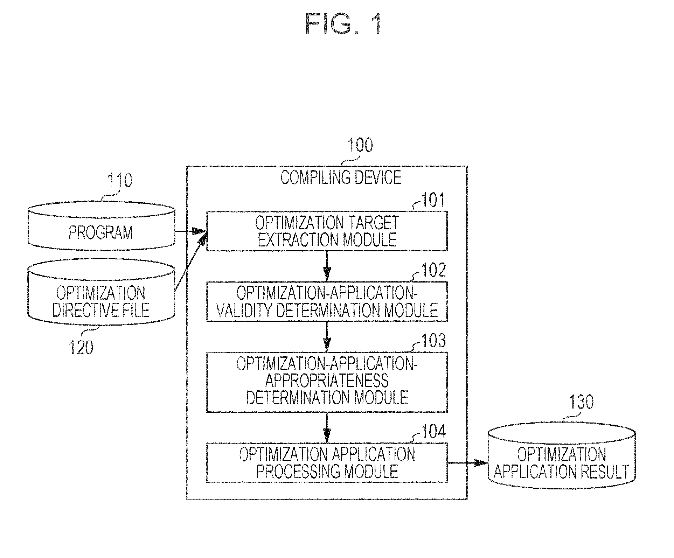

FIG. 1 is a block diagram illustrating a configuration of an embodiment of a compiling device 100 according to the present disclosure. The compiling device 100 includes an optimization-application-target extraction module 101, an optimization-application-validity determination module 102, an optimization-application-appropriateness determination module 103, and an optimization application processing module 104. The function of a compiler is made of functions of these modules. Hereinafter, the term "compiler" is simply used to refer to a function implemented when the compiling device 100 performs each function mentioned above, or a program.

The optimization-application-target extraction module 101 inputs a source program or an intermediate program 11, which is a result of applying optimization, (hereinafter, any one of these programs is referred to as a "program") and an optimization directive file 120, and extracts an optimization directive. For example, the optimization-application-target extraction module 101 extracts, from the optimization directive file 120, a portion to which optimization is to be applied and the content of optimization. Thus, the optimization-application-target extraction module 101 associates the optimization directive file 120 and the portion of the program 110 with each other. By using the optimization directive file 120, the optimization-application-target extraction module 101 may issue a directive for an intermediate stage of optimization performed by a compiler, and may also issue a directive for optimization where a portion of the program 110 that is not in the initial state thereof is specified as a portion to which optimization is to be applied. The term "intermediate stage of optimization", as used herein, is a stage where a compiler has performed one or more optimization passes for the program, and yet optimization is not completed. More specifically, by using the optimization directive file 120, the optimization-application-target extraction module 101 may issue a directive for further optimization for a state after optimization has been automatically performed by a compiler. By using the optimization directive file 120, the optimization-application-target extraction module 101 may issue a directive particularly for any combination or any order of kinds of optimization to be applied to loops in the program 110. Examples of kinds of optimization for loops for which directives may be issued include loop fusion, loop division, loop reversal, loop interchange, loop skewing, loop strip mining, and loop tiling. Details of these kinds of optimization will be described below.

The optimization-application-validity determination module 102 verifies whether or not the program 110 will be executed correctly as a result of optimization in accordance with an optimization directive, that is, the validity of an optimization directive. For example, based on an optimization directive extracted by the optimization-application-target extraction module 101, the optimization-application-validity determination module 102 temporarily applies the optimization directive to the program 110. The term "temporary application" refers to that an optimization directive is applied after the program 110 in the original state is saved in memory or the like so that the optimization directive may be canceled. The optimization-application-validity determination module 102 determines whether or not the dependency of data in the program 110 changes as a result of the temporary application. If the dependency of data in the program 110 has not changed, the optimization-application-validity determination module 102 determines that the program 110 is correctly executed and thus that the optimization is valid, and if the dependency of data has changed, the optimization-application-validity determination module 102 determines that the program 110 is not correctly executed and thus that the optimization is invalid. If the optimization-application-validity determination module 102 determines that optimization is invalid, the optimization-application-validity determination module 102 cancels the temporal application of optimization to the program 110 to restore the state of the program 110 to a state where the optimization has not yet been applied.

The optimization-application-appropriateness determination module 103 determines the probability that the execution performance will be improved by applying an optimization directive. For example, the optimization-application-appropriateness determination module 103 determines the degree of satisfaction of an applicable condition that is to be satisfied in the application of an optimization directive by a portion of the program 110 corresponding to that optimization directive. By determining the degree of satisfaction, the optimization-application-appropriateness determination module 103 determines the probability of improvement in execution performance (for example, reduction in execution time) for each portion of the program 110.

The optimization application processing module 104 regards the temporarily applied optimization for which a predetermined degree of satisfaction is determined by the optimization-application-appropriateness determination module 103 as a formal result of application of optimization (optimization application result) 130, and causes the formal optimization application result 130 to be reflected in the program 110 and to be output.

As described above, providing a description using the optimization directive file 120 enables a directive for optimization of an intermediate stage of optimization performed by a compiler to be issued from the beginning. That is, a directive for further optimization may be issued for a specific portion optimized by a compiler. Thus, a directive for optimization of a program may be issued without imposing a load on the user of a compiler, and, in addition, an effect of further improving execution performance due to the optimization capability of a compiler may be exploited.

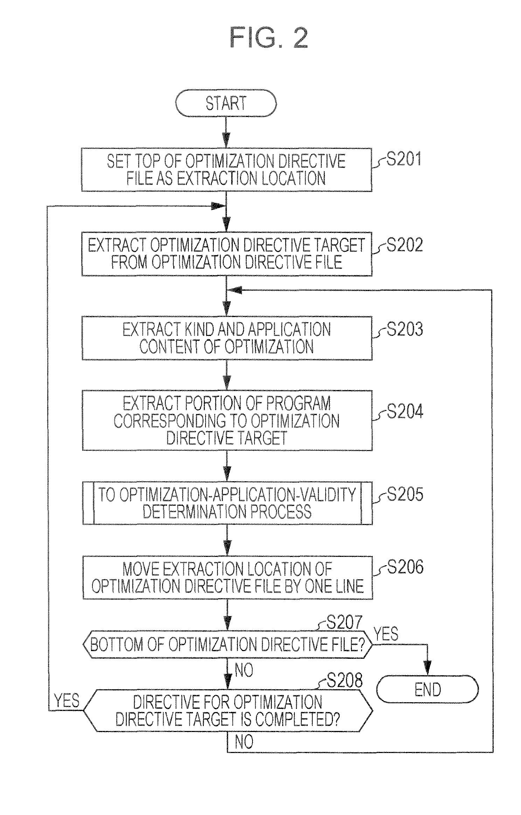

FIG. 2 is a flowchart illustrating a processing example of an optimization-application-target extracting process program that is loaded from, for example, an external storage device into memory and executed by a central processing unit (CPU) of a computer for the purpose of implementing the function of the optimization-application-target extraction module 101 in FIG. 1.

First, for example, the optimization directive file 120 is read from, for example, an external storage device into memory, and the top of the optimization directive file 120 is set as an extraction location (step S201).

Next, a target of a directive for optimization (hereinafter, referred to as an "optimization directive target") is extracted from the optimization directive file 120 (step S202). The optimization directive target is, for example, specific loop processing in the program 110 for which optimization is to be performed.

Next, the kind of optimization and the application content of optimization, which are described following the optimization directive target in step S202, are taken from the optimization directive file 120 (step S203). The kind of optimization is processing content indicating what processing is performed on the optimization directive target in step S202, and is, for example, loop fusion, loop division, loop interchange, loop reversal, loop skewing, loop tiling, or the like. Details of these kinds will be described below. The application content of optimization is specific content when processing of the kind of optimization mentioned above is performed on the optimization directive target in step S202, and is, for example, specific loop processing in the program 110, which serves as the partner of the optimization directive target when the processing of the kind of optimization is performed. More specifically, for example, in the case where the optimization directive target is "loop 1" in the program 110 and the kind of optimization is "loop fusion", "loop 2" in the program 110, which is the partner of fusion, is the application content of optimization.

Next, a portion of program 110 corresponding to the optimization directive target in step S202 is taken (step S204).

Thereafter, an optimization-application-validity determination process is performed (step S205). In this process, the function of the optimization-application-validity determination module 102 in FIG. 2, and the function of the optimization-application-appropriateness determination module 103 and the function of the optimization application processing module 104, these functions being called from the function of the optimization-application-validity determination module 102, are performed, and the optimization application result 130 (FIG. 1) of the program 110 is output.

After that, the taking location of the optimization directive file 120 is moved by one line (step S206).

Then, it is determined whether or not the bottom of the optimization directive file 120 has been reached (step S207).

If the determination in step S207 is "no", then it is determined whether or not the directive for the optimization directive target taken from the optimization directive file 120 in step S202 has been completed (step S208).

If the determination in step S208 is "no", the process returns to step S203, where the kind and application content of the next optimization are taken and optimization is applied to the program 110.

If the directive for an optimization directive target has been completed and thus the determination in step S208 is "yes", the process returns to step S202, where the next optimization directive target is taken from the optimization directive file 120, and then optimization is applied to this target. The next optimization directive target is "loop 1" at an intermediate stage, which is an optimization result of the program 110 for the original "loop 1", or "loop 2", which is different from "loop 1".

If reading from the optimization directive file 120 reaches the bottom of the optimization directive file 120 and thus the determination in step S207 is "no", the optimization-application-target extracting process in FIG. 2 is completed.

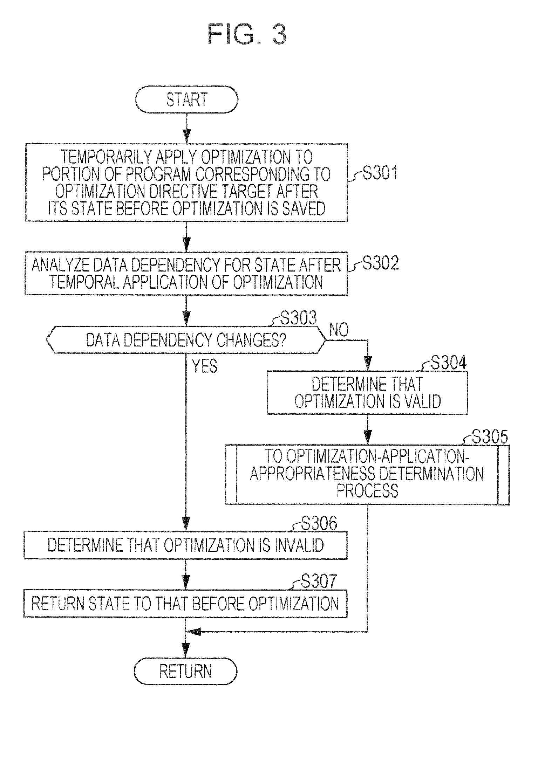

FIG. 3 is a flowchart illustrating a detailed example of the optimization-application-validity determination process in step S205 in FIG. 2.

First, optimization corresponding to the kind and application content of optimization taken in step S203 is temporarily applied to the portion of the program 110 corresponding to the optimization directive target in step S202, the portion of the program 110 being taken from the program 110 in step S204 in FIG. 2 (step S301). On this occasion, a state before optimization is saved in memory or the like.

Next, the data dependency is analyzed for a state of the portion of the program 110 after the temporal application of optimization (step S302).

It is determined whether or not the data dependency changes as a result of the process in step S302 (step S303).

If the data dependency does not change, and thus the determination in step S203 is "no", it is determined that optimization is valid (step S304), and the process proceeds to an optimization-application-appropriateness determination process (step S305). In this process, the function of the optimization-application-appropriateness determination module 103 and the function of the optimization application processing module 104 in FIG. 1 are performed. After this process, the process of the flowchart of FIG. 3 is completed, and the optimization-application-validity determination process in step S205 in FIG. 2 is completed.

If the data dependency changes, and thus the determination in step S303 is "yes", it is determined that optimization is invalid (step S306). Then, the state of the portion of the program 110 in step S204 in FIG. 2 is returned to the state before optimization that is saved in memory or the like in step S301 (step S307). After that, the process of the flowchart of FIG. 3 is completed, and the optimization-application-validity determination process in step S205 in FIG. 2 is completed.

Processing of analysis of the data dependency performed in step S302 in the optimization-application-validity determination process illustrated in the flowchart of FIG. 3 described above will be described.

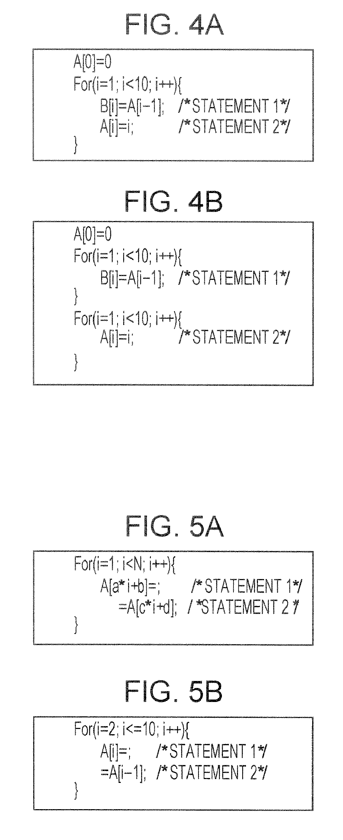

FIG. 4A and FIG. 4B are explanatory representations (1) of analysis processing of data dependency. A description is given of an example of a case where optimization of loop division is performed for a portion of a program depicted in FIG. 4A, resulting in a state depicted in FIG. 4B. Here, the term "loop division" refers to optimization in which one loop processing operation in the portion of the program is converted into plural loop processing operations. The data dependency in the portion of the program in FIG. 4A is that "after A[i] is defined in statement 2, A[i-1] is referred to in statement 2". In contrast, the data dependency in the portion of the program in FIG. 4B after optimization is that "after A[i-1] is defined in statement 1, A[i] is referred to in statement 2". In this case, since the data dependency changes definitively between the state in FIG. 4A and the state in FIG. 4B, this optimization (loop division) is determined to be invalid.

In the case where there is data dependency, if the order in which two statements are executed changes, there is a possibility that the data dependency changes, resulting in a change in execution result. For this reason, compilers have to avoid performing such program conversion.

FIG. 5A and FIG. 5B are explanatory representations (2) of analysis processing of data dependency.

The data dependency in the for loop in the portion of the program illustrated in FIG. 5A occurs when "A[a*i+b]" ("*" representing the operator for multiplication) of statement 1 and "A[c*i+d]" of statement 2 are at the same memory address. "A[a*i+b]" and "A[c*i+d]" are at the same memory address when these indices are equal. This is given by the following equation:

$$a*s+b=c*t+d \ (1)$$

Analysis of data dependency is analyzing whether or not integer solutions of s and t in the above equation (1) are within the loop range ($1 \leq s$, $t < N$) in a for loop. If the solutions are within the loop range, it is determined that there is data dependency, whereas if the solutions are not within the loop range, it is determined that there is no data dependency.

In cases where an array variable for which data dependency is to be analyzed is a multi-dimensional array, an equation is set up for each dimension, and simultaneous equations have to be solved. For such simultaneous equations, for example, a solution using polyhedron analysis described in the document below may be adopted.

Nixolas Vasilache, "Violated Dependence Analysis", ICS06, 2006

A simple example of analysis processing of data dependency will be described in conjunction with an example of a portion of a program in FIG. 5B. In this example, given that an index i of an array variable A[i] on the left side is s and an index i-1 of an array variable A[i-1] on the right side is t-1, it is assumed that A[i] and A[i-1] are at the same memory address if these indices are equal. Here, the index i, which is in practice a variable secured in memory, is referred to simply as "index" hereinafter. In this case, the simultaneous equations of analysis of data dependency turn into the following equation.

$$s = t - 1$$

$$2 <= s \leq 10$$

$$2 \leq t \leq 10$$

(2) Solving the above equation (2) gives

$$s = k$$

$$t = k + 1$$

$$2 \leq k \leq 9$$

(3) As a result, it is found that there is a solution of data dependency between an array variable A[k] that is expressed with an iteration value k of a loop, where $2 \leq k \leq 9$, and an array variable A[k] that is referred to by a value k+1.

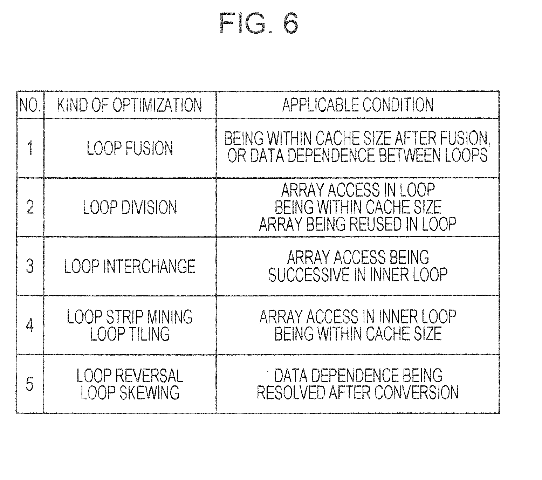

FIG. 6 depicts an example of an optimization-applicable condition scenario table loaded and stored from, for example, an external storage device in memory, the table being referred to in the optimization-application-appropriateness determination process in step S305 in FIG. 3. As described above in the description of FIG. 1, with the function of the optimization-application-validity determination module 102 performed in the optimization-application-validity determination process, the degree of satisfaction of an applicable condition to be satisfied by a portion of the program 110 corresponding to an optimization directive is determined by applying the optimization directive. Thus, the probability of improving execution performance is determined for each portion of the program 110. Accordingly, in this embodiment, for portions of the program 110 corresponding to optimization directives, pairs of kinds of optimization and applicable conditions that correspond to the kinds, the pairs being applied to those portions, are listed, respectively, and this list is stored as the optimization-applicable condition scenario table depicted in FIG. 6 in an external storage device, memory, or the like.

In the example in FIG. 6, numerical values 1, 2, 3, 4, and 5 in the "No." column indicate applicable conditions for respective kinds of optimization, each of which forms a scenario applied to some portion of the program 110.

In the "kind of optimization" column, kinds of optimization, such as "loop fusion", "loop division", "loop interchange", "loop strip mining", "loop tiling", "loop reversal", and "loop skewing", are registered. "Loop fusion" is optimization in which a plurality of loops are combined into a single one. "Loop division" is optimization in which a single loop is broken into a plurality of loops. "Loop interchange" is optimization in which the order of loop nests is interchanged in multiple-level nested loops. "Loop strip mining" is optimization in which a loop whose number of iterations is n is subdivided into m loop portions (n>m), and each loop portion is iterated n/m times. "Loop tiling" is optimization in which loop strip mining is performed for a multiple loop. "Loop reversal" is optimization in which the order of iterations of a loop is reversed. "Loop skewing" is optimization in which the control variable of an outer loop is added to the control variable of an inner loop.

In the "applicable condition" column, applicable conditions for applying the kinds of optimization registered in the "kind of optimization" column are registered for the kinds of optimization, respectively.

In the case where the kind of optimization is "loop fusion", the applicable condition is "being within cache size after fusion, or data dependence between loops". It is determined whether or not the condition "being within cache size" is satisfied, for example, by comparing a cache size determined by a computer (target machine) on which the program to be compiled will be executed with the range of an array variable accessed in the loop. It is determined whether or not there is data dependency between loops, for example, by executing the same analysis processing of data dependency as that in step S302 in FIG. 3 described above. When the applicable condition "being within cache size after fusion" is satisfied, only the frequency of cache access increases, while the frequency of main memory access decreases, during execution of the program. As a result, the execution time of the program 110 is reduced and thus the execution performance is improved. When the applicable condition "data dependence between loops" is satisfied, data having data dependency is collected into a single loop by loop fusion. As a result, the data is more likely, for example, to be stored within a cache, or the continuity of access is improved, reducing the execution time of the program 110, which, in turn, improves execution performance.

In the case where the kind of optimization is "loop division", the applicable condition is "array access in loop being within cache size, and array being reused in loop". When arrays reused in a loop are separated in different loops, respectively, data in each loop is more likely, for example, to be stored within a cache, or the continuity of access is increased, during execution of each loop. As a result, the execution time of the program 110 is reduced and thus the execution performance is improved.

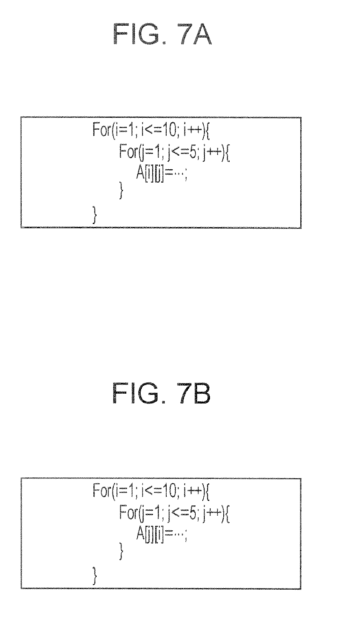

In the case where the kind of optimization is "loop interchange", the applicable condition is "array access being successive in inner loop". It is determined whether or not array access is successive, for example, by comparing the manner in which elements of an array variable are aligned in memory with the order in which these elements are accessed in a loop. For example, in the case of a program written in the C language, elements of a two-dimensional array variable A[10][5] are aligned in memory in the order of, for example, A[1][1], A[1][2], A[1][3], A[1][4], A[1][5], A[2][1], A[2][2], ... In such a situation, for example, in the portion of the program depicted in FIG. 7A, since, in the inner for loop, an index "j", which indicates an element that is successively aligned in memory as mentioned above, in an array variable A[i][j] is sequentially incremented, it is determined that access in this case is successive access. In contrast, for example, in the portion of the program depicted in FIG. 7B, since, in the inner for loop, an index "j", which indicates an element that is not successively aligned in memory as mentioned above, in an array variable A[j][i] is sequentially incremented, it is determined that the access in this case is not successive access. When array access is successive in an inner loop, access areas in memory access are also successive, for example. Thus, quicker memory access is more likely to be achieved, reducing the execution time of the program 11, which, in turn, improves execution performance.

In the case where the kind of optimization is "loop strip mining" or "loop tiling", the applicable condition is "array access in inner loop being within cache size". Whether or not the array access in an inner loop is within a cache size is determined in a similar way to that in the case of "loop fusion".

In the case of "loop reversal" or "loop skewing", the applicable condition is "data dependence being resolved after conversion". It is determined whether or not data dependence is resolved, in a similar way to that in the case of "loop fusion".

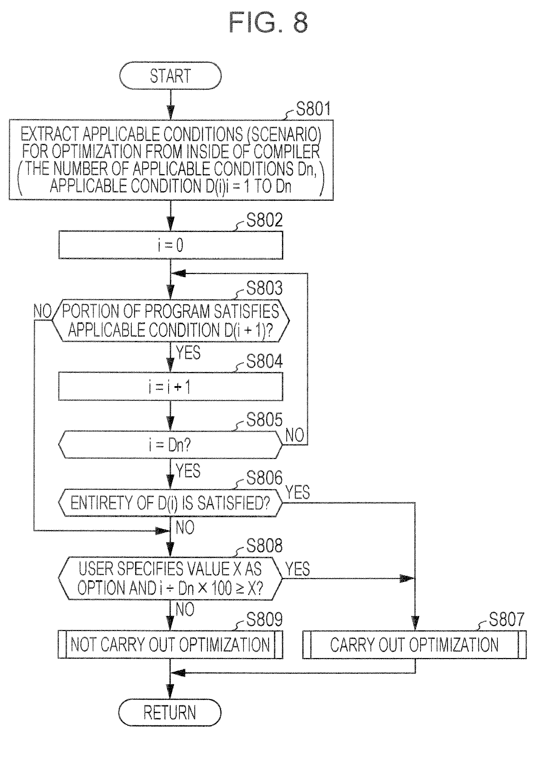

FIG. 8 is a flowchart illustrating a detailed example of the optimization-application-appropriateness determination process in step S305 in FIG. 3. In this process, control operations using the optimization-applicable condition scenario table depicted in FIG. 6 stored in memory or the like are performed.

First, the optimization-applicable condition scenario table depicted in FIG. 6 is referred to for every kind of optimization in step S203 in FIG. 2. As a result, applicable conditions for optimization are taken from inside compiler (memory). It is assumed that the number of the applicable conditions for every kind of optimization at this time is Dn, each applicable condition is D(i), and i=1 to Dn (step S801).

Next, the initial value of the variable i in memory is set to 0 (step S802).

Next, it is determined whether or not the portion of the program 110 satisfies an applicable condition D(i+1) (step S803).

If the determination is "yes" in step S803, the value of the index i is incremented by one (step S804).

Then, it is determined whether the value of the index i is equal to Dn (step S805).

If the determination is "no" in step S805, the process returns to step S803, where the process is repeated.

In the repetition mentioned above, if the portion of the program 110 does not satisfy the application condition D(i+1), and thus the determination in step S803 is "no", the repetition processing is terminated at that time, and the process proceeds to step S808.

If the value of the index i is equal to Dn and thus the determination in step S805 is "yes", then it is determined whether or not the portion of the program 110 satisfies the entirety of the application condition D(i) (step S806).

If the determination in step S806 is "yes", optimization corresponding to the kind and application content of optimization in step S203 in FIG. 2 is carried out (step S807). That is, when the portion of the program 110 satisfies all the applicable conditions specified as the optimization condition D(i) by using the optimization directive file 120, optimization of the optimization kind corresponding to the applicable conditions is carried out. Then, the process depicted by the flowchart in FIG. 8 is completed, and the optimization-application-appropriateness determination process in step S305 in FIG. 3 is completed.

If the determination in step S806 is "no" or if the determination in step S803 is "no", the user of the compiler specifies a value X as an option, and the value, expressed as a percentage, is calculated by dividing the value of the number i that satisfies the application condition D(i+1) by Dn and then multiplying the result by 100. Then, it is determined whether or not the value expressed as a percentage is equal to or greater than the value specified as an option (step S808). Here, the value X specified as an option by the user represents the rate of satisfaction (percentage), that is, how many applicable conditions are satisfied among Dn applicable conditions. For example, when, among Dn applicable conditions, m applicable conditions are satisfied, it is determined whether or not the value of $m/Dn \times 100$ (percentage) is equal to or greater than X.

If the determination in step S808 is "yes", optimization corresponding to the kind and application content of optimization in step S203 in FIG. 2 is carried out (step S807). After that, the process of the flowchart of FIG. 8 is completed, and the optimization-application-appropriateness determination process in step S305 in FIG. 3 is completed.

If the determination in step S808 is "no", optimization is not carried out (step S809), the flowchart of FIG. 8 is completed, and the optimization-application-appropriateness determination process in step S305 in FIG. 3 is completed.

An example of operations of a compiler according to this embodiment illustrated in the flowcharts of FIG. 2, FIG. 3 and FIG. 8 described above will now be described.

When, for optimization for which a directive is issued under the condition that the portion to which the optimization is to be applied is specified in the source program or an intermediate program, which is an optimization application result, if it is determined in the processes of the flowcharts described above that a result that will be obtained by applying the optimization is correct and that application of the optimization will result in improvement in execution performance, the optimization is applied.

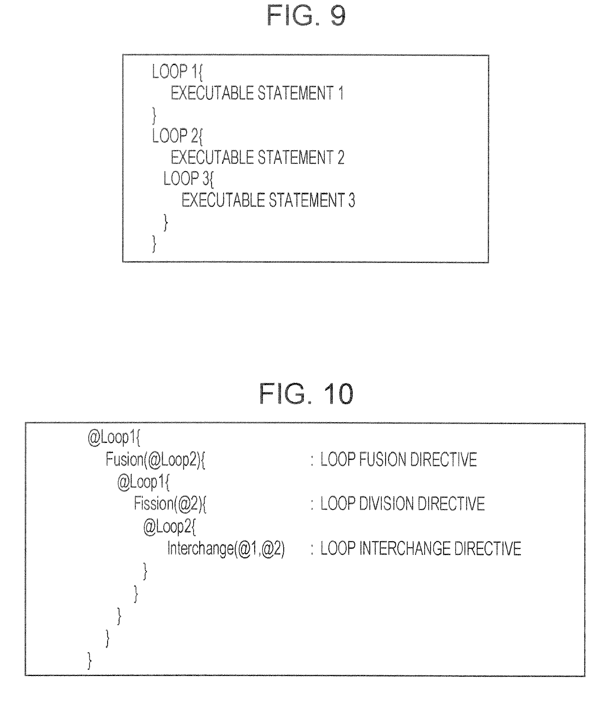

FIG. 9 is a representation depicting an example of an image of a source program. Cases where it is desired to subject this source program example to optimization mentioned below will be described by way of example.

Loop fusion directive: fuse together a loop 1 and a loop 2.

Loop division directive: divide the loop obtained by fusion in accordance with the loop fusion directive is divided between executable statement 2 and executable statement 3.

Loop interchange directive: interchange nests of the second loop divided in accordance with the loop division directive.

FIG. 10 depicts an example of description of the optimization directive file 120 (FIG. 1) for issuing a directive for the optimization described above. In FIG. 10, "@Loop1" and "@Loop2" are optimization directive targets extracted in step S202 in FIG. 2.

"Fusion(@Loop2)" is an optimization directive indicating a loop fusion directive. In step S203 in FIG. 2, "Fusion" is recognized, and thus the kind of optimization "loop fusion" is extracted. "@Loop2" in parentheses is recognized, and thus application content in which the loop 2 is fused into the loop 1 is extracted.

"Fission(@2)" is an optimization directive indicating a loop division directive. In step S203 in FIG. 2, "Fission" is recognized, and thus the kind of the optimization "loop division" is extracted. Additionally, "@2" in parentheses is recognized, and thus application content is extracted in which, after the loop fusion, a loop located after the second statement is divided into two loops.

"Interchange(@1,@2)" is an optimization directive indicating a loop interchange directive. In step S203 in FIG. 2, "Interchange" is recognized, and thus the kind of the optimization "loop interchange" is extracted. Additionally, "@1,@2" in parentheses is recognized, and thus application content is extracted in which a nested loop (@1) at the first level and a nested loop (@2) at the second level in the specified optimization directive target are interchanged.

Among optimization directives described above, the loop fusion directive may be described, for example, in the source program in FIG. 9 by using a related-art technique. However, since the loop division directive and the loop interchange directive are directives issued for results of the loop fusion directive, it has been impracticable to describe these directives in the source program in FIG. 9 by using any one of the related-art techniques. In contrast, with this embodiment, it is possible to describe the loop division directive and the loop interchange directive in the optimization directive file 120 of FIG. 10 from the beginning. With this embodiment, after an optimization directive is issued, a directive for further optimization may be issued by using the optimization directive file 120 for issuing directives for optimization. Thus, a directive for optimization of a program may be issued without imposing a load on the user of a compiler, and, in addition, an effect of further improving execution performance due to the optimization capability of a compiler may be exploited.

The user of a compiler describes a directive for each loop operation in the optimization directive file 120 as the inverse of the settings of the optimization-applicable condition scenario table depicted in FIG. 6. That is, for example, if a loop in the source program is so large as to be not stored within the cache, the user issues a directive for loop division. Additionally, if an array is unlikely to be successively accessed in some inner loop, the user issues a directive for loop interchange. Further, if array access in an inner loop is not kept within a cache, the user issues a directive for loop strip mining or loop tiling.

Through the optimization-application-target extracting process of the flowchart of FIG. 2 described above, an optimization directive target and the kind and application content of optimization are sequentially taken from the optimization directive file 120 depicted in FIG. 10.

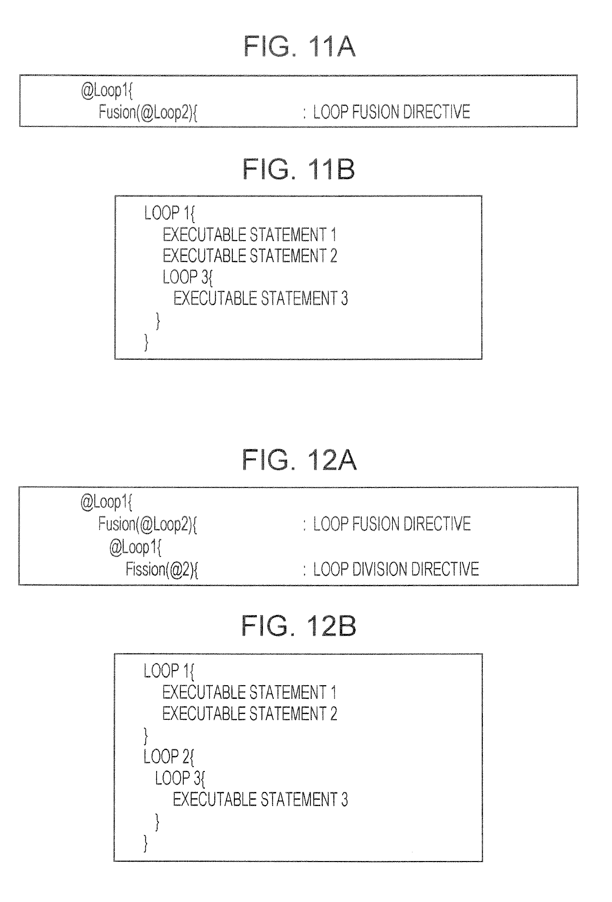

First, an optimization directive portion illustrated in FIG. 11A is taken from the optimization directive file 120 depicted in FIG. 10. Based on this optimization directive portion, the optimization-application-validity-determination process of the flowchart of FIG. 3 and the optimization-application-appropriateness determination process of the flowchart of FIG. 8 described above are performed, so that the loop 1 and the loop 2 are fused together. That is, when, as a result of temporary application of an optimization directive, all the applicable conditions specified as the optimization condition D(i), which is taken in step S801 in FIG. 8, are satisfied, or a given percentage or more of the applicable conditions are satisfied, optimization of an optimization kind corresponding to such applicable conditions is finally determined. As a result, the source program of the image depicted in FIG. 9 is optimized, so that a source program at an intermediate stage of the image illustrated in FIG. 11B is realized. That is, an executable statement 2 executed in the loop 2 is optimized so as to be executed along with an executable statement 1 in the loop 1.

Next, another optimization directive portion is taken from the optimization directive file 120 depicted in FIG. 10, so that the optimization directive portions taken are as depicted in FIG. 12A. Based on this optimization directive portion, the fusion result in FIG. 11B is optimized in such a way that a portion after the second statement (@2) in this fusion result is divided into two two-level nested loops, the loop 2 and a loop 3, and the executable statement 3 is executed in the two-level nested loops. As a result, the source program at the intermediate stage of the image illustrated in FIG. 11B is optimized, so that a source program at an intermediate stage of the image depicted in FIG. 12B is realized.

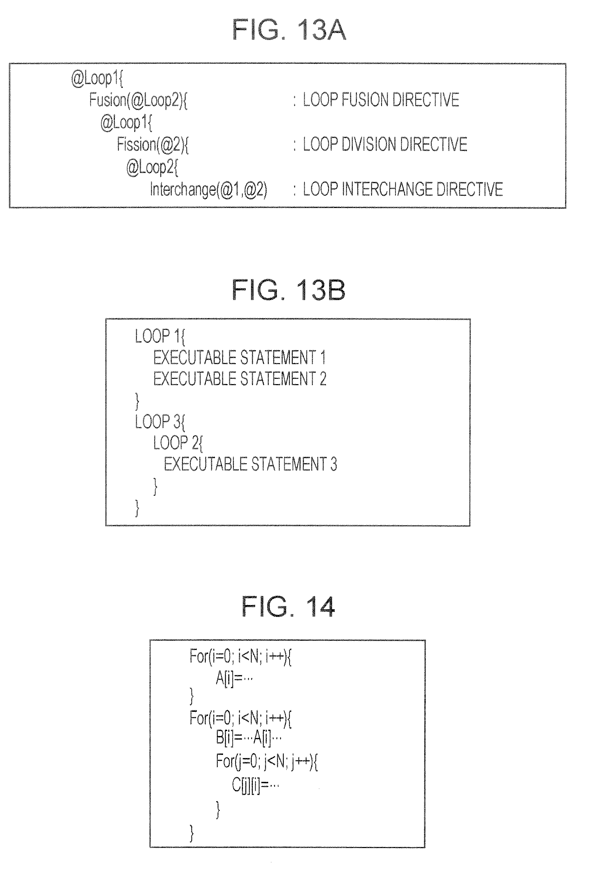

Finally, a further optimization directive portion is taken from the optimization directive file 120 depicted in FIG. 10, and thus the optimization directive portions taken are as depicted in FIG. 13A. Based on this optimization directive portion, in the division result in FIG. 12B, the loop 2 at the first level (@1), which is the second loop of the division result, and the loop 3 at the second level (@2) in the two-level nested loops are interchanged. As a result, the source program at the intermediate stage of the image depicted in FIG. 12B is optimized, so that a source program at the final stage of the image depicted in FIG. 13B is realized.

In such a way as described above, by using the optimization directive file 120 depicted in FIG. 10, the source program of the image depicted in FIG. 9 is optimized, so that the source program at the final stage of the image depicted in FIG. 13B is realized.

FIG. 14 depicts a more specific example of an image of a source program. Operations of the case where optimization is executed for the source program of this image by using the optimization directive file of FIG. 10 described above will now be described.

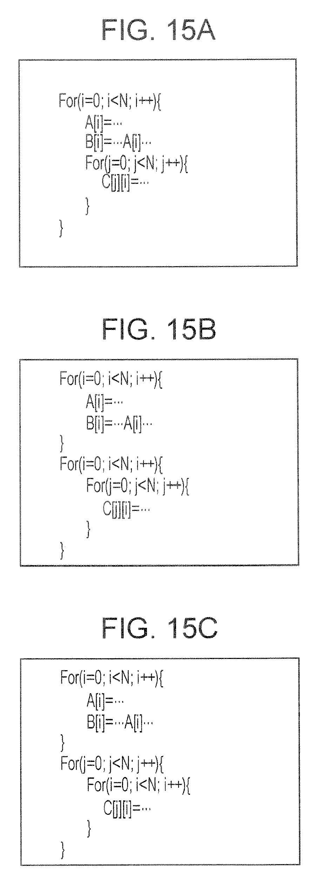

First, an optimization directive portion illustrated in FIG. 11A is taken from the optimization directive file 120 depicted in FIG. 10. Based on this optimization directive portion, the optimization-application-validity-determination process of the flowchart of FIG. 3 and the optimization-application-appropriateness determination process of the flowchart of FIG. 8 described above are performed, so that the a first for loop and a second for loop in FIG. 14 are fused together. As a result, the source program of the image depicted in FIG. 14 is optimized, so that a source program at an intermediate stage of the image depicted in FIG. 15A is realized. That is, optimization is performed so that an assignment statement to an array variable B[i], which is executed in the second for loop in the source program in FIG. 14, will be executed along with an assignment statement to an array variable A[i] in the first for loop in the source program in FIG. 15A.

Next, another optimization directive portion is taken from the optimization directive file 120 depicted in FIG. 10, so that the optimization directive portions taken are as depicted in FIG. 12A. Based on this optimization directive portion, the fusion result in FIG. 15A is optimized in such a way that a portion after the second for loop statement (@2) in this fusion result is divided into two two-level nested for loops, and an assignment statement to an array variable C[j][i] is executed in the two-level nested for loops. As a result, the source program at the intermediate stage of the image depicted in FIG. 15A is optimized, so that a source program at an intermediate stage of the image depicted in FIG. 15B is realized.

Finally, a further optimization directive portion is taken from the optimization directive file 120 depicted in FIG. 10, so that the optimization directive portions taken are as depicted in FIG. 13A. Based on this optimization directive portion, in the division result in FIG. 15B, the for loop at the first level (@1), which is the second for loop of the division result, and the for loop at the second level (@2) in the two-level nested for loops are interchanged. As a result, the source program at the intermediate stage of the image depicted in FIG. 15B is optimized, so that a source program at the final stage of the image depicted in FIG. 15C is realized.

In such a way as described above, by using the optimization directive file 120 depicted in FIG. 10, the source program of the image depicted in FIG. 14 is optimized, so that the source program at the final stage of the image depicted in FIG. 15C is realized.

By using the optimization directive file 120 depicted in FIG. 10, optimization effects listed below are obtained for the source program of the image of FIG. 14. The loop fusion directive makes it possible to use a cache with more efficiency by using the array variable A in the same loop. Additionally, the loop division directive makes it possible to inhibit the array variables A and B from being expelled from the cache by an array C. Further, the loop interchange directive makes it possible to cause access to the array variable C in the innermost loop to be successive, resulting in quicker processing.

With a related-art compiler, when optimization equivalent to that of the loop fusion directive is automatically performed with a determination of the compiler, it has been impracticable to subsequently issue a directive for optimization of loop division. In contrast to this, in an optimization directive method with a compiler according to this embodiment, a directive for optimization of loop division may be issued after loop fusion, by using the loop division directive depicted in FIG. 10. Further, as the subsequent optimization directive, a directive such as a loop interchange directive may be issued. Since such directives may be issued, optimization of a compiler may operate in order to produce optimization effects as described above.

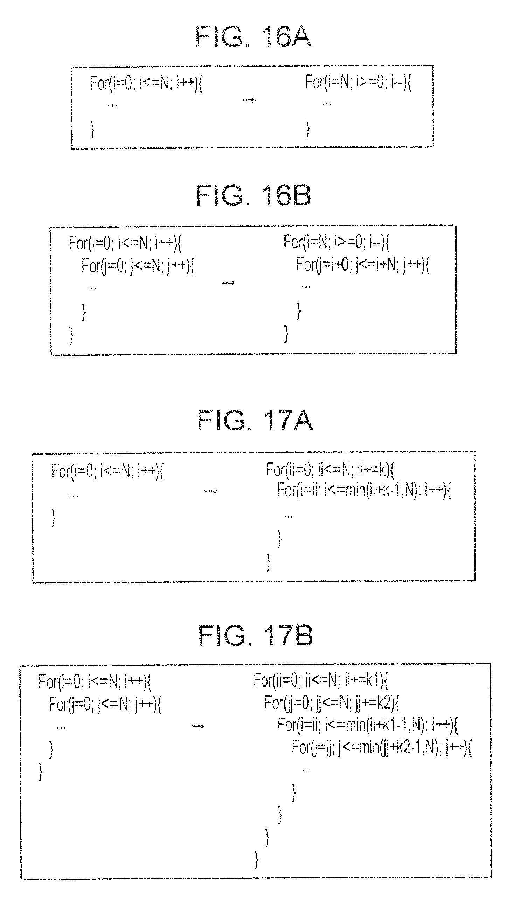

FIG. 16A and FIG. 16B and FIG. 17A and FIG. 17B are explanatory representations of optimization operations with directives for loop operations such as loop reversal, loop skewing, loop strip mining, and loop tiling that may be carried out by a compiler of this embodiment, other than the loop fusion, loop division, and loop interchange described in conjunction with FIG. 10.

FIG. 16A is an explanatory representation of optimization operations with a directive for optimization of loop reversal. With a loop reversal directive, optimization in which the order of iterations of a for loop is reversed is executed.

FIG. 16B is an explanatory representation of optimization operations with a directive for optimization of loop skewing. With a loop skewing directive, optimization in which a variable i of the outer for loop is added to a variable j of the inner for loop is executed.

FIG. 17C is an explanatory representation of optimization operations with a directive for optimization of loop strip mining. With a loop strip mining directive, optimization in which a single iteration of a for loop is subdivided into k times of smaller iterations is executed.

FIG. 17D is an explanatory representation of optimization operations with a directive for optimization of loop tiling. With a loop tiling directive, optimization is executed in which each loop in the two-level nested loops is subdivided so that data of an area of $k1 \times k2$ is accessed in the inner loop.

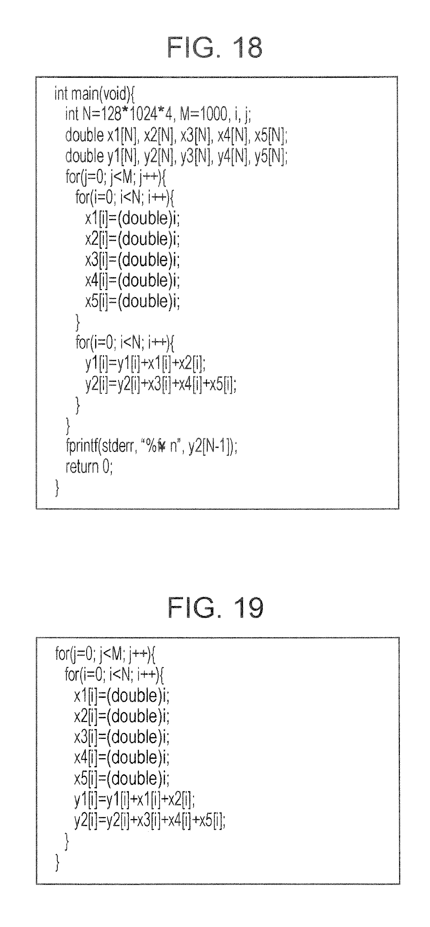

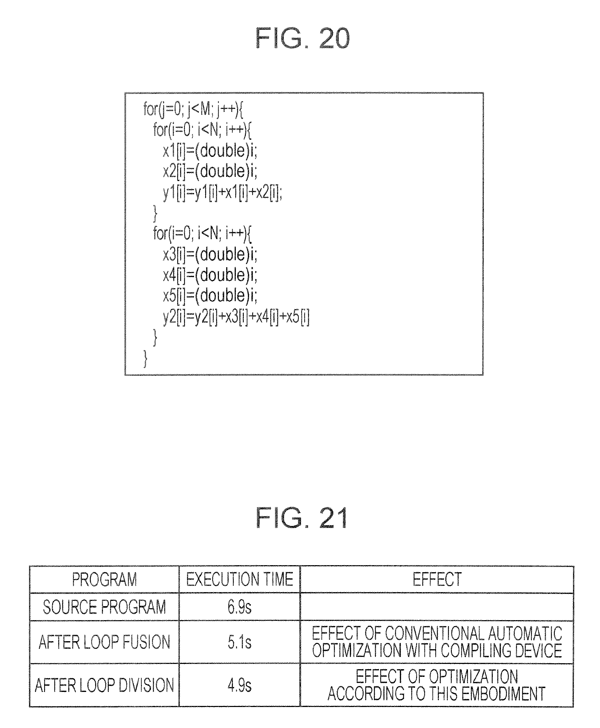

FIG. 18 depicts an example of a source program with which the execution performance will be improved by using an optimization directive. FIG. 19 depicts an optimized state after issuance of a directive for loop fusion of the source program of FIG. 18. FIG. 20 depicts an optimized state after issuance of a directive for loop division for a source program image at an intermediate stage in FIG. 19.

In FIG. 18 to FIG. 20, the number of elements of each of array variables x1, x2, x3, x4, x5, y1, and y2 used in loops is N=524288. Each array variable is a double type, and thus one element has a size of 8 bytes. Consequently, the size of every array variable is $N \times 8 = 494304$ bytes=4 M bytes. In FIG. 18, the size of data accessed in a loop including the array variables x1 to x5 is $4 \times 5 = 20$ M bytes.

In contrast, the size of data of array variables accessed in a loop in FIG. 19, which results from loop fusion, is $4 \times 7 = 28$ M bytes. In the case of a cache size of 20 M bytes, all the data of array variables accessed in the loop in FIG. 19 is not placed in the cache and some amount of the data overflows (cache miss). In this case, the execution performance is lower than in the case where all the data is placed in the cache.

When, in such a situation, the loop is divided as depicted in FIG. 20, all the data in both loops is placed in the cache, which leads to improvement in performance. Note that, in the original case of FIG. 18, data placed in the first loop overflows during the second loop. For this reason, the original case is inferior in performance to the optimization result in FIG. 20. Consequently, with the compiler of this embodiment, optimization is performed in the order of FIG. 18, FIG. 19, and FIG. 20. This makes it possible to improve the execution performance of a program.

FIG. 21 is a table listing effects of optimization according to this embodiment. In execution in some calculating machine (a cache memory of 20 MB), execution times are as listed in FIG. 21. The case where loop division is performed after loop fusion with the compiler of this embodiment may produce better improvement in execution performance than the case where loop fusion is performed as automatic optimization with a related-art compiler.

The optimization directive method in the compiler of this embodiment does not limit the kinds of optimization functions for directives. However, in order to enable optimization, in particular, of loops to be controlled, the form of an optimization directive file is adopted with which loops to be optimized may be identified. In the data configuration example of the optimization directive file depicted in FIG. 10, loops are identified by labels with serial numbers assigned to respective loops, such as @Loop1 and @Loop2.

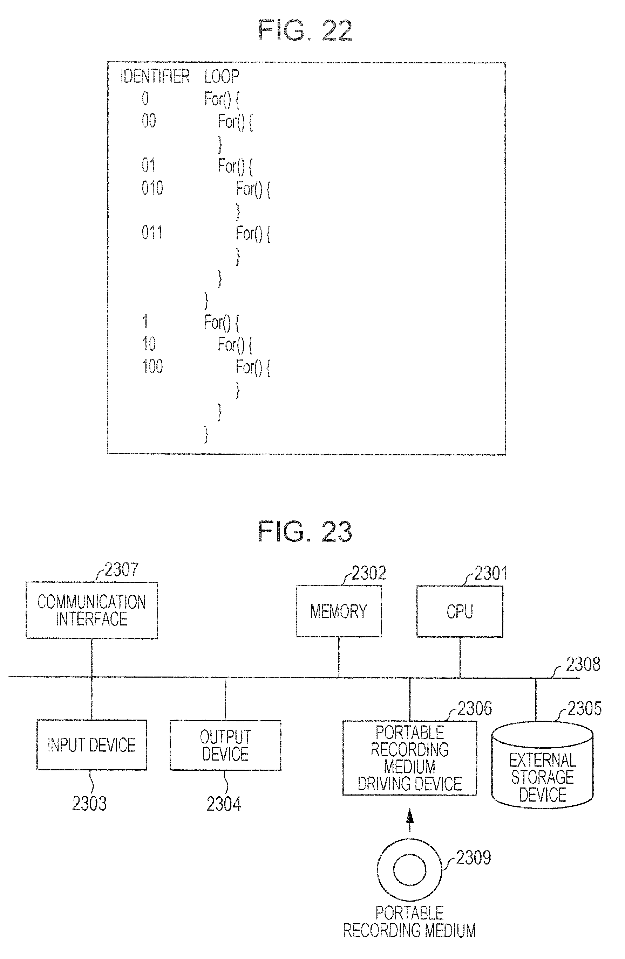

In addition, the optimization directive file may include identifiers capable of identifying locations at which loops appear. For example, a loop may be identified by a numeral having the number of digits corresponding to the depth of the loop and having a value that represents how many loops (0, 1, 2, ...) there are before this loop appears at the same depth. FIG. 22 depicts an example of the correspondence between such identifiers and loops.

Identifiers 0 and 1 indicate the first and second for loops at the first level, respectively.

Identifiers 00 and 01 indicate the first and second for loops at the second level, respectively, in the first for loop at the first level. Similarly, an identifier 10 indicates the first for loop at the second level in the second for loop at the first level.

Identifiers 010 and 011 indicate the first and second for loops at the third level, respectively, in the second for loop at the first level. Similarly, an identifier 100 indicates the first for loop at the third level in the first for loop at the first level.

The reason for taking into consideration in particular control of optimization of loops is that loops typically account for a high percentage of the execution time of the program.

FIG. 23 is a block diagram illustrating an example of a hardware configuration of a computer capable of executing a compiler program according to this embodiment.

The computer illustrated in FIG. 23 includes a CPU 2301, a memory 2302, an input device 2303, an output device 2304, an external storage device 2305, a portable recording medium driving device 2306 to which a portable recording medium 2309 is inserted, and a communication interface 2307, and has a configuration in which these components are coupled to one another by a bus 2308. The configuration illustrated in this diagram is an example of a computer capable of implementing the compiling device 100 provided with the functions in FIG. 1, and such a computer is not limited to this configuration.

The CPU 2301 controls the entirety of the computer concerned. The memory 2302 is memory, such as random access memory (RAM), that temporarily stores a program or data stored in the external storage device 2305 (or the portable recording medium 2309) at the time of program execution, data update, or the like. The CPU 2301 controls the entirety by reading a program to the memory 2302 and executing it.

The input device 2303 detects an input operation performed by the user with a keyboard, a mouse, or the like, and notifies the CPU 2301 of the detection result.

The output device 2304 outputs data sent under control of the CPU 2301 to a display device or a printing device.

The external storage device 2305 is, for example, a hard disk storage device. This device is mainly used for saving various types of data and programs.

The portable recording medium driving device 2306 contains the portable recording medium 2309, such as an optical disc, a synchronous dynamic random access memory (SDRAM), or CompactFlash (registered trademark), and is assigned a role of assistance to the external storage device 2305.

The communication interface 2307 is a device for connecting communication lines, for example, of a local area network (LAN) or a wide area network (WAN).

A system according to this embodiment is implemented by execution of a program including functions implemented in the flowcharts of FIG. 2, FIG. 3, and FIG. 8, and so on by the CPU 2301. The program may be recorded and distributed, for example, on the external storage device 2305 or the portable recording medium 2309, or may be acquired from a network with the communication interface 2307.

Conventionally, in the case where a portion that is not in a source program is generated by optimization, it has been difficult to describe, in the source program, a directive for optimization of the "portion that is not" in the source program. In contrast to this, in this embodiment, by using the optimization directive file, a directive for optimization of a portion that is not in the initial state of the program may be issued by giving directives for optimization from the initial state of the program in the order in which these directives are to be applied.

Note that, in this embodiment, in the case where a directive for optimization is issued after "one or more passes of optimization" have been automatically applied by a compiler, optimization is applied if there exists a predicted state before compiling.

In such a way as described above, according to this embodiment, optimization is applied to a program, based on a directive for the program at an intermediate stage of optimization performed by a compiling device. This makes it possible to exploit an effect of improving the execution performance due to the optimization capability of a compiler.

Additionally, there are provided ways for determining whether or not application of optimization is correct and whether or not the execution performance will be improved when optimization are applied. Thus, it is possible to reduce a load that the user of a compiling device has to take the appropriateness of directives for optimization into consideration.

Further, it is possible to exploit an effect of improving the execution performance by using ways for controlling a method of applying existing optimization functions, without enhancing automatic optimization functions of a compiling device.

**Claims**

1. A compiling device comprising:

   a memory; and
   a processor coupled to the memory, the processor configured to:

   extract, from a file, an optimization directive for a program at an intermediate stage of program optimization;
   by applying the optimization directive, verify validity of data dependency of the program; and
   by applying the optimization directive, determine a probability of improvement in execution performance, based on a degree of satisfaction of an optimization applicable condition that is to be satisfied by the program.

2. The compiling device according to claim 1, wherein the processor is configured to determine the probability of improvement in execution performance for each portion of the program by determining the degree of satisfaction of the applicable condition that is to be satisfied, by applying the optimization directive, by a portion of the program at the intermediate stage of program optimization corresponding to the optimization directive.

3. The compiling device according to claim 1 or 2, wherein the processor is configured to input the program and the file, to extract, from the file, a portion to which optimization is to be applied and a kind and content of the optimization, and to thus establish an association with the portion of the program.

4. The compiling device according to any of claims 1 to 3, wherein the processor is configured to temporarily apply a directive for optimization to the program, based on the optimization directive, and to determine whether or not the program is correctly executed by the temporarily applied directive for optimization, by analyzing whether dependency of data in the program does not change as a result of temporarily applying the directive.

5. The compiling device according to any of claims 2 to 4, wherein the applicable condition of optimization includes either a condition that a portion of the program corresponding to a result of temporary application of optimization be within a size of a cache or a condition that data dependence exist between loop processing operations that form portions of the program.

6. The compiling device according to any of claims 2 to 5, wherein the applicable condition of optimization includes either a condition that access to data in an array variable within a portion of the program corresponding to a result of temporary application of optimization be within a size of a cache or a condition that the data in the array variable be reused within the portion of the program.

7. The compiling device according to any of claims 2 to 6, wherein the applicable condition of optimization includes a condition that access to data in an array variable within a portion of the program corresponding to a result of temporary application of optimization be successive.

8. The compiling device according to any of claims 2 to 7, wherein the applicable condition of optimization includes a condition that there be no data dependence within a portion of the program corresponding to a result of temporary application of optimization.

9. The compiling device according to any of claims 2 to 8, wherein the applicable condition of optimization is set in advance for each of kinds of the directive for optimization, the kinds of the directive for optimization including at least one of a loop fusion directive, a loop division directive, a loop interchange directive, a loop reversal directive, a loop skewing directive, a loop strip mining directive, and a loop tiling directive.

10. A non-transitory, computer-readable recording medium having stored therein a program for causing a computer to execute a process, the process comprising:

an optimization directive extraction process for extracting, from a file, an optimization directive for a program at an intermediate stage of program optimization;
an optimization-application-validity determination process for verifying validity of the optimization directive; and
an optimization-application-appropriateness determination process for determining a probability of improvement in execution performance by applying the optimization directive.

11. A compiling method for causing a computer to execute processing comprising:

in an optimization directive extraction process, extracting, from a file, an optimization directive for a program at an intermediate stage of program optimization;
in an optimization-application-validity determination process, verifying validity of the optimization directive; and
in an optimization-application-appropriateness determination process, determining a probability of improvement in execution performance by applying the optimization directive.

# FIG. 1

# FIG. 2

```
                    ┌─────────────┐
                    │    START    │
                    └──────┬──────┘
                           ▼
        ┌──────────────────────────────────────┐
        │  SET TOP OF OPTIMIZATION DIRECTIVE    │  S201
        │      FILE AS EXTRACTION LOCATION      │
        └──────────────────┬───────────────────┘
                           ▼
        ┌──────────────────────────────────────┐
        │ EXTRACT OPTIMIZATION DIRECTIVE TARGET │  S202
        │     FROM OPTIMIZATION DIRECTIVE FILE  │
        └──────────────────┬───────────────────┘
                           ▼
        ┌──────────────────────────────────────┐
        │      EXTRACT KIND AND APPLICATION     │  S203
        │        CONTENT OF OPTIMIZATION        │
        └──────────────────┬───────────────────┘
                           ▼
        ┌──────────────────────────────────────┐
        │       EXTRACT PORTION OF PROGRAM      │
        │    CORRESPONDING TO OPTIMIZATION      │  S204
        │            DIRECTIVE TARGET           │
        └──────────────────┬───────────────────┘
                           ▼
        ┌──────────────────────────────────────┐
        │  TO OPTIMIZATION-APPLICATION-VALIDITY │  S205
        │        DETERMINATION PROCESS          │
        └──────────────────┬───────────────────┘
                           ▼
        ┌──────────────────────────────────────┐
        │     MOVE EXTRACTION LOCATION OF       │  S206
        │ OPTIMIZATION DIRECTIVE FILE BY ONE LINE│
        └──────────────────┬───────────────────┘
                           ▼                S207
        ╱───────────────────────────────────────╲   YES
        ⟨ BOTTOM OF OPTIMIZATION DIRECTIVE FILE? ⟩─────┐
        ╲───────────────────────────────────────╱     │
                           │ NO                        ▼
                           ▼              S208      ┌──────┐
        ╱───────────────────────────────────────╲   │ END  │
   YES  ⟨      DIRECTIVE FOR OPTIMIZATION         ⟩  └──────┘
   ┌────⟨  DIRECTIVE TARGET IS COMPLETED?         ⟩
        ╲───────────────────────────────────────╱
                           │ NO
```

# FIG. 3

```
                    ┌─────────────┐
                    │    START    │
                    └─────────────┘
                           │
                           ▼
     ┌──────────────────────────────────────────┐
     │    TEMPORARILY APPLY OPTIMIZATION TO       │
     │ PORTION OF PROGRAM CORRESPONDING TO        │  S301
     │   OPTIMIZATION DIRECTIVE TARGET AFTER      │
     │   ITS STATE BEFORE OPTIMIZATION IS SAVED   │
     └──────────────────────────────────────────┘
                           │
                           ▼
     ┌──────────────────────────────────────────┐
     │ ANALYZE DATA DEPENDENCY FOR STATE AFTER    │  S302
     │  TEMPORAL APPLICATION OF OPTIMIZATION      │
     └──────────────────────────────────────────┘
                           │
                           ▼           S303
         ◇─────────────────────────────◇   NO
         │   DATA DEPENDENCY CHANGES?   │───────┐
         ◇─────────────────────────────◇       │
                      │ YES                     ▼       S304
                      │              ┌──────────────────────┐
                      │              │      DETERMINE THAT    │
                      │              │  OPTIMIZATION IS VALID │
                      │              └──────────────────────┘
                      │                         │
                      │                         ▼           S305
                      │          ┌───────────────────────────────┐
                      │          │    TO OPTIMIZATION-APPLICATION-  │
                      │          │ APPROPRIATENESS DETERMINATION   │
                      │          │           PROCESS               │
                      │          └───────────────────────────────┘
                      ▼                         │
     ┌──────────────────────────────────────────┐  S306
     │  DETERMINE THAT OPTIMIZATION IS INVALID    │
     └──────────────────────────────────────────┘
                      │                          │
                      ▼           S307           │
     ┌──────────────────────────────────────────┐│
     │ RETURN STATE TO THAT BEFORE OPTIMIZATION   ││
     └──────────────────────────────────────────┘│
                      │                          │
                      ▼◄─────────────────────────┘
                ┌─────────────┐
                │   RETURN    │
                └─────────────┘
```

## FIG. 4A

```
A[0]=0
For(i=1; i<10; i++){
    B[i]=A[i-1];   /*STATEMENT 1*/
    A[i]=i;        /*STATEMENT 2*/
}
```

## FIG. 4B

```
A[0]=0
For(i=1; i<10; i++){
    B[i]=A[i-1];   /*STATEMENT 1*/
}
For(i=1; i<10; i++){
    A[i]=i;        /*STATEMENT 2*/
}
```

## FIG. 5A

```
For(i=1; i<N; i++){
    A[a*i+b]=;     /*STATEMENT 1*/
        =A[c*i+d]; /*STATEMENT 2*/
}
```

## FIG. 5B

```
For(i=2; i<=10; i++){
    A[i]=;     /*STATEMENT 1*/
       =A[i-1]; /*STATEMENT 2*/
}
```

# FIG. 6

| NO. | KIND OF OPTIMIZATION | APPLICABLE CONDITION |
|---|---|---|
| 1 | LOOP FUSION | BEING WITHIN CACHE SIZE AFTER FUSION, OR DATA DEPENDENCE BETWEEN LOOPS |
| 2 | LOOP DIVISION | ARRAY ACCESS IN LOOP BEING WITHIN CACHE SIZE ARRAY BEING REUSED IN LOOP |
| 3 | LOOP INTERCHANGE | ARRAY ACCESS BEING SUCCESSIVE IN INNER LOOP |
| 4 | LOOP STRIP MINING LOOP TILING | ARRAY ACCESS IN INNER LOOP BEING WITHIN CACHE SIZE |
| 5 | LOOP REVERSAL LOOP SKEWING | DATA DEPENDENCE BEING RESOLVED AFTER CONVERSION |

FIG. 7A

```
For(i=1; i<=10; i++){
    For(j=1; j<=5; j++){
        A[i][j]=...;
    }
}
```

FIG. 7B

```
For(i=1; i<=10; i++){
    For(j=1; j<=5; j++){
        A[j][i]=...;
    }
}
```

# FIG. 8

```
                        ┌─────────┐
                        │  START  │
                        └────┬────┘
                             │                    ╭─S801
    ┌────────────────────────▼──────────────────────────┐
    │   EXTRACT APPLICABLE CONDITIONS (SCENARIO)          │
    │  FOR OPTIMIZATION FROM INSIDE OF COMPILER            │
    │ ( THE NUMBER OF APPLICABLE CONDITIONS Dn, )          │
    │ (  APPLICABLE CONDITION D(i)i = 1 TO Dn   )          │
    └────────────────────────┬──────────────────────────┘
                             │                    ╭─S802
            ┌────────────────▼────────────────┐
            │              i = 0               │
            └────────────────┬────────────────┘
                             │
                             │             ╭─S803
        NO ╱PORTION OF PROGRAM SATISFIES╲
        ◄──╲ APPLICABLE CONDITION D(i + 1)?╱
                             │ YES
                             │        ╭─S804
            ┌────────────────▼────────────────┐
            │            i = i + 1             │
            └────────────────┬────────────────┘
                             │        ╭─S805     NO
                   ╱        i = Dn?        ╲ ──────►
                             │ YES
                             │    ╭─S806        YES
            ╱  ENTIRETY OF D(i) IS SATISFIED?  ╲ ─────────►
                             │ NO
                             │    ╭─S808        YES
            ╱  USER SPECIFIES VALUE X AS      ╲ ──────►
            ╲  OPTION AND i ÷ Dn × 100 ≥ X?   ╱
                             │ NO
                             │    ╭─S809              ╭─S807
    ┌────────────────────────▼─────┐    ┌────────────▼───────────┐
    │ │ NOT CARRY OUT OPTIMIZATION │ │  │ │ CARRY OUT OPTIMIZATION │ │
    └────────────┬─────────────────┘    └────────────────────────┘
                 │
           ┌─────▼─────┐
           │  RETURN   │
           └───────────┘
```

## FIG. 9

```
LOOP 1{
    EXECUTABLE STATEMENT 1
}
LOOP 2{
    EXECUTABLE STATEMENT 2
  LOOP 3{
      EXECUTABLE STATEMENT 3
  }
}
```

## FIG. 10

```
@Loop1{
    Fusion(@Loop2){          : LOOP FUSION DIRECTIVE
      @Loop1{
        Fission(@2){          : LOOP DIVISION DIRECTIVE
          @Loop2{
            Interchange(@1,@2)  : LOOP INTERCHANGE DIRECTIVE
          }
        }
      }
    }
}
```

# FIG. 11A

```
@Loop1{
    Fusion(@Loop2){          : LOOP FUSION DIRECTIVE
```

# FIG. 11B

```
LOOP 1{
    EXECUTABLE STATEMENT 1
    EXECUTABLE STATEMENT 2
    LOOP 3{
        EXECUTABLE STATEMENT 3
    }
}
```

# FIG. 12A

```
@Loop1{
    Fusion(@Loop2){          : LOOP FUSION DIRECTIVE
    @Loop1{
        Fission(@2){         : LOOP DIVISION DIRECTIVE
```

# FIG. 12B

```
LOOP 1{
    EXECUTABLE STATEMENT 1
    EXECUTABLE STATEMENT 2
}
LOOP 2{
    LOOP 3{
        EXECUTABLE STATEMENT 3
    }
}
```

# FIG. 13A

```
@Loop1{
    Fusion(@Loop2){          : LOOP FUSION DIRECTIVE
    @Loop1{
        Fission(@2){          : LOOP DIVISION DIRECTIVE
        @Loop2{
            Interchange(@1,@2)  : LOOP INTERCHANGE DIRECTIVE
```

# FIG. 13B

```
LOOP 1{
    EXECUTABLE STATEMENT 1
    EXECUTABLE STATEMENT 2
}
LOOP 3{
    LOOP 2{
        EXECUTABLE STATEMENT 3
    }
}
```

# FIG. 14

```
For(i=0; i<N; i++){
    A[i]=···
}
For(i=0; i<N; i++){
    B[i]=···A[i]···
    For(j=0; j<N; j++){
        C[j][i]=···
    }
}
```

## FIG. 15A

```
For(i=0; i<N; i++){
     A[i]=...
     B[i]=...A[i]...
     For(j=0; j<N; j++){
          C[j][i]=...
     }
}
```

## FIG. 15B

```
For(i=0; i<N; i++){
     A[i]=...
     B[i]=...A[i]...
}
For(i=0; i<N; i++){
     For(j=0; j<N; j++){
          C[j][i]=...
     }
}
```

## FIG. 15C

```
For(i=0; i<N; i++){
     A[i]=...
     B[i]=...A[i]...
}
For(j=0; j<N; j++){
     For(i=0; i<N; i++){
          C[j][i]=...
     }
}
```

## FIG. 16A

```
For(i=0; i<=N; i++){          For(i=N; i>=0; i--){
   ...              →            ...
}                             }
```

## FIG. 16B

```
For(i=0; i<=N; i++){          For(i=N; i>=0; i--){
  For(j=0; j<=N; j++){          For(j=i+0; j<=i+N; j++){
    ...            →              ...
  }                            }
}                             }
```

## FIG. 17A

```
For(i=0; i<=N; i++){          For(ii=0; ii<=N; ii+=k){
   ...             →            For(i=ii; i<=min(ii+k-1,N); i++){
}                                 ...
                                }
                              }
```

## FIG. 17B

```
For(i=0; i<=N; i++){          For(ii=0; ii<=N; ii+=k1){
  For(j=0; j<=N; j++){          For(jj=0; jj<=N; jj+=k2){
    ...           →               For(i=ii; i<=min(ii+k1-1,N); i++){
  }                                 For(j=jj; j<=min(jj+k2-1,N); j++){
}                                     ...
                                    }
                                  }
                                }
                              }
```

## FIG. 18

```
int main(void){
  int N=128*1024*4, M=1000, i, j;
  double x1[N], x2[N], x3[N], x4[N], x5[N];
  double y1[N], y2[N], y3[N], y4[N], y5[N];
  for(j=0; j<M; j++){
    for(i=0; i<N; i++){
      x1[i]=(double)i;
      x2[i]=(double)i;
      x3[i]=(double)i;
      x4[i]=(double)i;
      x5[i]=(double)i;
    }
    for(i=0; i<N; i++){
      y1[i]=y1[i]+x1[i]+x2[i];
      y2[i]=y2[i]+x3[i]+x4[i]+x5[i];
    }
  }
  fprintf(stderr, "%f\n", y2[N-1]);
  return 0;
}
```

## FIG. 19

```
for(j=0; j<M; j++){
  for(i=0; i<N; i++){
    x1[i]=(double)i;
    x2[i]=(double)i;
    x3[i]=(double)i;
    x4[i]=(double)i;
    x5[i]=(double)i;
    y1[i]=y1[i]+x1[i]+x2[i];
    y2[i]=y2[i]+x3[i]+x4[i]+x5[i];
  }
}
```

# FIG. 20

```
for(j=0; j<M; j++){
  for(i=0; i<N; i++){
    x1[i]=(double)i;
    x2[i]=(double)i;
    y1[i]=y1[i]+x1[i]+x2[i];
  }
  for(i=0; i<N; i++){
    x3[i]=(double)i;
    x4[i]=(double)i;
    x5[i]=(double)i;
    y2[i]=y2[i]+x3[i]+x4[i]+x5[i]
  }
}
```

# FIG. 21

| PROGRAM | EXECUTION TIME | EFFECT |
|---|---|---|
| SOURCE PROGRAM | 6.9s | |
| AFTER LOOP FUSION | 5.1s | EFFECT OF CONVENTIONAL AUTOMATIC OPTIMIZATION WITH COMPILING DEVICE |
| AFTER LOOP DIVISION | 4.9s | EFFECT OF OPTIMIZATION ACCORDING TO THIS EMBODIMENT |

## FIG. 22

```
IDENTIFIER   LOOP
   0         For() {
   00          For() {
               }
   01          For() {
   010           For() {
                 }
   011           For() {
                 }
             }
           }
   1         For() {
   10          For() {
   100           For() {
                 }
             }
           }
```

## FIG. 23

2307 COMMUNICATION INTERFACE

2302 MEMORY

2301 CPU

2308

2306 PORTABLE RECORDING MEDIUM DRIVING DEVICE

2305 EXTERNAL STORAGE DEVICE

2303 INPUT DEVICE

2304 OUTPUT DEVICE

2309 PORTABLE RECORDING MEDIUM

Europäisches
Patentamt

European
Patent Office

Office européen
des brevets

**EUROPEAN SEARCH REPORT**

Application Number

EP 15 16 0215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUIMIN CUI ET AL: "Extendable pattern-oriented optimization directives", ACM TRANSACTIONS ON ARCHITECTURE AND CODE OPTIMIZATION, vol. 9, no. 3, 1 September 2012 (2012-09-01), pages 1-37, XP055194940, ISSN: 1544-3566, DOI: 10.1145/2355585.2355587 | 1-3,5-11 | INV. G06F9/45 |
| Y | * abstract * * page 2, paragraph 2 - page 5, paragraph 1; figure 2 * * page 10, paragraph 2 - page 15, paragraph 8; figures 11-13; table I * * page 16, paragraph 2 - page 22, paragraph 6; figures 18,19 * ----- | 4 | |
| Y | SYLVAIN GIRBAL ET AL: "Semi-Automatic Composition of Loop Transformations for Deep Parallelism and Memory Hierarchies", INTERNATIONAL JOURNAL OF PARALLEL PROGRAMMING, KLUWER ACADEMIC PUBLISHERS-PLENUM PUBLISHERS, NE, vol. 34, no. 3, 21 July 2006 (2006-07-21), pages 261-317, XP019397471, ISSN: 1573-7640, DOI: 10.1007/S10766-006-0012-3 * page 297, paragraph 3 - page 298, paragraph 4; figures 23-25 * * page 301, last paragraph - page 311, paragraph 2; figures 31-34 * ----- | 4 | TECHNICAL FIELDS SEARCHED (IPC) G06F |

-/--

The present search report has been drawn up for all claims

| Place of search | Date of completion of the search | Examiner |
|---|---|---|
| Munich | 11 June 2015 | Lelait, Sylvain |

EPO FORM 1503 03.82 (P04C01)

Europäisches
Patentamt

European
Patent Office

Office européen
des brevets

# EUROPEAN SEARCH REPORT

Application Number

EP 15 16 0215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | QING YI: "Automated programmable control and parameterization of compiler optimizations", CODE GENERATION AND OPTIMIZATION (CGO), 2011 9TH ANNUAL IEEE/ACM INTERNATIONAL SYMPOSIUM ON, IEEE, 2 April 2011 (2011-04-02), pages 97-106, XP031863936, DOI: 10.1109/CGO.2011.5764678 ISBN: 978-1-61284-356-8 * abstract * * page 97, left-hand column, paragraph 2 - page 104, left-hand column, paragraph 3; figures 1,3; table I * | 1-11 | |
| A | RICARDO NOBRE ET AL: "On Expressing Strategies for Directive-Driven Multicore Programing Models", PARALLEL PROGRAMMING AND RUN-TIME MANAGEMENT TECHNIQUES FOR MANY-CORE ARCHITECTURES AND DESIGN TOOLS AND ARCHITECTURES FOR MULTICORE EMBEDDED COMPUTING PLATFORMS, ACM, 2 PENN PLAZA, SUITE 701 NEW YORK NY 10121-0701 USA, 20 January 2014 (2014-01-20), pages 7-12, XP058035428, DOI: 10.1145/2556863.2556870 ISBN: 978-1-4503-2607-0 * abstract * * page 7, right-hand column, paragraph 1 - page 7, right-hand column, paragraph 2 * * page 8, left-hand column, paragraph 5 - page 10, left-hand column, paragraph 6; figure 2 * | 1-11 | TECHNICAL FIELDS SEARCHED (IPC) |

-/--

The present search report has been drawn up for all claims

| Place of search | Date of completion of the search | Examiner |
|---|---|---|
| Munich | 11 June 2015 | Lelait, Sylvain |

EPO FORM 1503 03.82 (P04C01)

Europäisches
Patentamt

European
Patent Office

Office européen
des brevets

**EUROPEAN SEARCH REPORT**

Application Number

EP 15 16 0215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/048121 A1 (BLAINEY ROBERT J [CA] ET AL BLAINEY ROBERT JAMES [GB] ET AL) 2 March 2006 (2006-03-02) * abstract; figures 9,10 * * page 1, paragraph 13 * * page 3, paragraph 37 - page 3, paragraph 44 * * page 4, paragraph 47 - page 8, paragraph 97 * | 1-11 | |

TECHNICAL FIELDS
SEARCHED      (IPC)

The present search report has been drawn up for all claims

| Place of search | Date of completion of the search | Examiner |
|---|---|---|
| Munich | 11 June 2015 | Lelait, Sylvain |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 15 16 0215

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2015

| Patent document cited in search report | Publication date | Patent family member(s) | Publication date |
|---|---|---|---|
| US 2006048121 A1 | 02-03-2006 | NONE | |

EPO FORM P0459

For more details about this annex : see Official Journal of the European Patent Office, No. 12/82

**EP 2 963 547 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10021086 A
- JP 2004021498 A
- JP 2003173262 A